# EUROPEAN PATENT SPECIFICATION

(11) **EP 1 576 873 B1**
(45) Date of publication and mention of the grant of the patent: **21.05.2008**
(21) Application number: 05075606.3
(22) Date of filing: 11.03.2005
(51) Int. Cl.: A01K 1/015, E04F 15/08

(54) **Floor slabs**
Bodenplatten
Dalles de plancher

(30) Priority: 15.03.2004 NL 1025720
(43) Date of publication of application: 21.09.2005
(73) Proprietor: Sierbeton Industrie Markelo B.V., 7475 NH Markelo (NL)
(72) Inventor: Bearzatto, Donino Antonio, 7461 ZM Rijssen (NL)
(74) Representative: 't Jong, Bastiaan Jacobus

(56) References cited:
- AT-B- 353 049
- DE-A- 2 064 718
- DE-A- 3 244 732
- NL-C- 1 007 565
- US-A1- 2002 018 908

## Description

The invention relates to a floor slab, for instance for cattle farms. Such floor slabs are usually laid on a sand bed or ground surface required for the purpose. The animals then walk on these floor slabs. The floor slabs become fouled by, among other things, excreta. Cleaning takes place regularly, and most easily with a high-pressure spray. This is readily possible on smooth floor slabs.

The drawback of flat, smooth floor slabs is however that they become very slippery due to the excreta of the animals or other released waste, whereby farm workers as well as animals can easily slip and fall.

Smooth concrete slabs are also used for the storage of cattle fodder such as grass and crushed maize in respect of the good resistance to the effect of released acids. Other of the many applications are: in garden centres, tree nurseries and diverse types of storage locations and production areas inside and outside.

Floor slabs are also known which are provided with grooves. These grooves increase the roughness of the floor slab, whereby the chance of slipping and falling is reduced. The drawback of grooves is that dirt accumulates therein and can only be removed therefrom with difficulty using both a scraper and a high-pressure spray. When the grooves are filled with dirt, the roughness-increasing effect of these grooves is then nullified.

NL-C-1007565 discloses a floor slab with a number of plateau-like elevations.

It is therefore an object of the invention to provide a floor slab which not only provides a good roughness but which can also be easily kept clean.

This objective is achieved with a floor slab according to claim 1, which floor slab has a surface on which it is possible to walk and which is provided with a large number of plateau-like elevations.

The plateau-like elevations ensure that both animal and human gain sufficient grip in that they can push off against these plateau-like elevations. The plateau-like elevations further provide a relatively smooth surface, and the space between the plateau-like elevations is likewise flat, whereby the floor can easily be kept clean.

In a preferred embodiment, the total surface area of the elevations covers 25%-40% of the surface on which it is possible to walk. It has been found that at such a ratio a good grip can be obtained on the floor slab, while the floor slab can also be kept properly clean.

According to the invention, the elevations are arranged in a regular pattern, wherein the elevations overlap each other as seen in the surface on which it is possible to walk. The floor slab can hereby be scraped clean in any direction by means of a knife, and the knife is prevented from being able to fall between the elevations. Because the elevations overlap each other in the surface on which it is possible to walk, the knife is always supported by an elevation and cannot therefore fall between elevations.

The elevations are substantially cylindrical. Such a design of the elevations has the advantage that the cost of manufacturing a mould for the floor slabs can be kept relatively low and that a cured concrete slab is also easily released from the mould. A cylinder shape also has the advantage that it is relatively strong and the chance of pieces breaking off is relatively low.

The centre-to-centre distance between adjacent elevations is less than twice the diameter of the elevations. A floor slab is hereby obtained with a sufficient roughness which can easily be kept clean.

These and other features of the invention are further elucidated with reference to the accompanying drawings.

Figure 1 shows a perspective view a number of floor slabs according to the invention placed adjacently of each other.

Figure 2 shows a detail of a floor slab according to figure 1.

Figure 3 shows a top view of a floor slab according to figure 1.

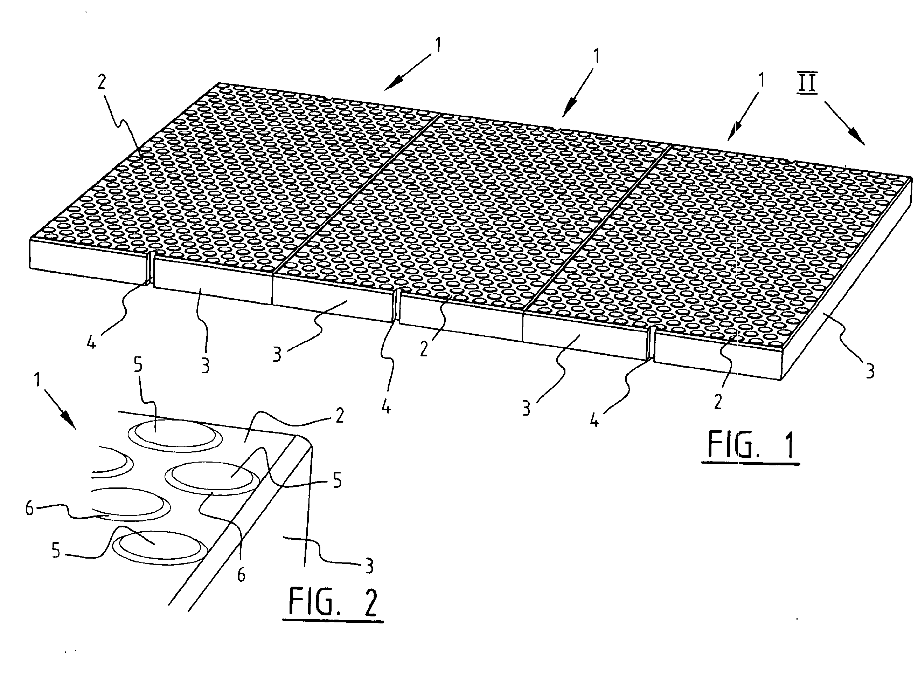

Figure 1 shows three floor slabs 1 according to the invention. Each floor slab 1 has a surface 2 on which it is possible to walk and side surfaces 3. In side surfaces 3 are provided channels 4 with which a floor slab can easily be lifted and displaced.

Figure 2 shows a detail of floor slab 1 of figure 1. Plateau-like elevations 5 are arranged on the surface 2 on which it is possible to walk. These plateau-like elevations 5 are here cylindrical and provided with a small chamfering 6. This chamfering 6 provides for robust elevations 5 which are strong and from which pieces do not break off easily.

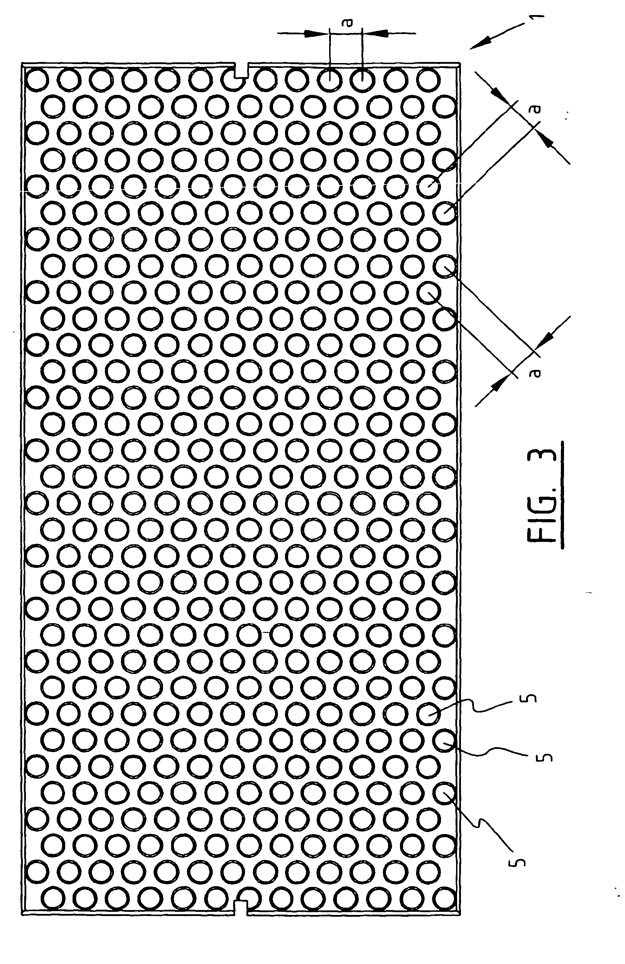

Figure 3 shows a top view of a floor slab 1 of figure 1. Elevations 5 are arranged in rows in width direction. The rows are alternately offset relative to each other. The centre-to-centre distance A between adjoining elevations 5 is everywhere the same, and in the shown embodiment this distance A is less than twice the diameter of an elevation 5. A floor slab 1 with elevations 5 is hereby provided, wherein it is not possible for a scraping knife to fall between the elevations, since there is always an elevation available on which the scraping knife can support.

## Claims

1. Concrete floor slab (1), for instance for a stall floor, which floor slab has a surface (2) on which it is possible to walk and which is provided with a large number of plateau-like elevations (5),
**characterized in that**
the elevations (5) are arranged in a regular pattern, wherein the elevations overlap each other as seen in any direction in the surface on which it is possible to walk, the elevations (5) are substantially cylindrical and the centre-to-centre distance (a) between adjacent elevations is less than twice the diameter of the elevations.

2. Floor slab as claimed in claim 1, wherein the total surface area of the elevations (5) covers 25%-40% of the surface (2) on which it is possible to walk.

## Patentansprüche

1. Bodenplatte (1) aus Beton, beispielsweise für einen Stallboden, wobei die Bodenplatte eine Oberfläche (2) aufweist, die begehbar ist und die mit einer großen Anzahl von plateau-artigen Erhebungen (5) ausgebildet ist,
**dadurch gekennzeichnet, dass**
die Erhebungen (5) in einem regelmäßigen Muster angeordnet sind, wobei die Erhebungen in beliebiger Richtung in der begehbaren Oberfläche betrachtet einander überschneiden, wobei die Erhebungen (5) im Wesentlichen zylindrisch sind und der Mittenabstand (a) zwischen benachbarten Erhebungen kleiner als das Doppelte des Durchmessers der Erhebungen ist.

2. Bodenplatte nach Anspruch 1, bei welcher der Flächeninhalt der Oberfläche der Erhebungen (5) insgesamt 25 % bis 40 % der begehbaren Oberfläche (2) bedeckt.

## Revendications

1. Dalle de plancher (1) en béton, destinée par exemple au plancher d'une étable, laquelle dalle de plancher a une surface (2) sur laquelle il est possible de marcher et qui est munie d'un grand nombre d'élévations en plateau (5) ;
**caractérisée en ce que**
les élévations (5) sont disposées suivant un motif régulier, dans laquelle les élévations se chevauchent les unes les autres vues dans une quelconque direction de la surface sur laquelle il est possible de marcher, les élévations (5) sont sensiblement cylindriques et la distance de centre à centre (a) entre des élévations adjacentes est inférieure au double du diamètre des élévations.

2. Dalle de plancher selon la revendication 1, dans laquelle la surface totale des élévations (5) recouvre 25% - 50% de la surface (2) sur laquelle il est possible de marcher.
